# EUROPÄISCHE PATENTSCHRIFT

(11) **EP 2 715 619 B1**
(45) Veröffentlichungstag und Bekanntmachung des Hinweises auf die Patenterteilung: **04.05.2016**
(21) Anmeldenummer: 12723143.9
(22) Anmeldetag: 14.05.2012
(51) Int. Cl.: G06K 19/077

(54) **SICHERHEITS- ODER WERTDOKUMENT UND VERFAHREN ZU DESSEN HERSTELLUNG**
SECURITY OR VALUE DOCUMENT AND METHOD FOR PRODUCING SAME
DOCUMENT DE SÉCURITÉ OU DE VALEUR, ET PROCÉDÉ DE PRODUCTION

(30) Priorität: 01.06.2011 DE 102011050794
(43) Veröffentlichungstag der Anmeldung: 09.04.2014
(73) Patentinhaber: Bundesdruckerei GmbH, 10969 Berlin (DE)
(72) Erfinder: FISCHER, Jörg, 13053 Berlin (DE); TRÖLENBERG, Stefan, 15749 Mittenwalde (DE); DONATH, Denis, 16348 Wandlitz (DE); PAESCHKE, Manfred, 16348 Wandlitz (DE)
(74) Vertreter: Mammel und Maser
(86) Internationale Anmeldenummer: PCT/EP2012/058890
(87) Internationale Veröffentlichungsnummer: WO 2012/163658

(56) Entgegenhaltungen:
- WO-A1-03/034333
- DE-A1-102005 030 626
- DE-A1-102006 030 406
- DE-C1- 19 963 165

## Beschreibung

Die Erfindung bezieht sich auf Sicherheits- oder Wertdokumente, wie beispielsweise Personalausweise, Reisepässe, Führerscheine, Zutrittskarten, Berechtigungsausweise, Telefonkarten, Krankenkassenkarten, Kreditkarten, Scheckkarten oder Sicherheitsausweise mit einem Displaymodul sowie ein Verfahren zu dessen Herstellung.

Solche Sicherheits- oder Wertdokumente mit einem Display sind beispielsweise aus der WO 2004/080100, EP 0920675 bekannt. Solche kartenförmigen Dokumente können Displayelemente diverser Bauweisen, wie zum Beispiel mit einer elektrophoretischen Anzeige, einer elektrochromen Anzeige, einer LED-Anzeige oder dergleichen, umfassen. Durch die Einführung der ICAO-9303-Norm für maschinenlesbare Reisedokumente auf der Basis der ISO 14443A/B, also des RF-Kommunikationsstandards für Reisedokumente, werden Reisepässe mit Antennenspulen und einem kryptographischen Chip ausgegeben. Kartenförmige Dokumente (ID-1) und Sicherheitsdrucke werden im Allgemeinen mittels Lamination aus einem Schichtverbund mehrerer Folien, mindestens zwei, bevorzugt sieben bis zehn, hergestellt, um verschiedene Sicherheitselemente in verschiedenen Lagen des Dokumentes zu positionieren. Sicherheitskarten bestehen nach dem Stand der Technik aus wenigstens einem Kunststoff mit hoher Erweichungstemperatur, welche größer 100 °C, bevorzugt 120 °C, liegt. Diese sind besonders bevorzugt monolithisch aus einem Material aufgebaut, können aber auch verschiedene Materialien enthalten. Bei der Herstellung solcher kartenförmigen Dokumente tritt jedoch bei einzubettenden elektronischen Bauteilen, wie beispielsweise einem Display, das Problem auf, dass diese bei hohen Temperaturen und Prozessdrücken zerstört werden. Dies beruht darauf, dass aufgrund der Einbringung von Fenstern zur Sichtbarmachung des Displayelementes unterschiedliche Schichtdicken des Kartenkörpers gegeben sind, welche zur Zerstörung der Komponenten führen können.

Zur Vermeidung dieses Problems wurden gemäß der DE 10 2007 016 777 A1 vorgeschlagen, einen Kartenrohling getrennt vom Displaymodul herzustellen, wobei in den Kartenrohling eine Kavität eingefräst wird, in welcher nach der Fertigstellung und Prüfung des Kartenrohlings und des Displaymoduls das Displaymodul eingesetzt wird.

Des Weiteren wird alternativ hierzu durch die DE 10 2009 009 263 A1 ein Verfahren zur Herstellung eines Sicherheitsdokumentes mit einem Displayelement und einem IC-Chip vorgeschlagen, bei dem nach dem Einbringen des IC-Chips und des Displayelementes in eine Trägerschicht zunächst eine transparente Deckschicht aufgebracht wird, um anschließend mittels Siebdruck opake Schichten aufzubringen, die ein Fenster umfassen. Dadurch wird bei diesem Verfahren sowohl eine Laminiertechnik als auch eine Offsetdrucktechnik zur Herstellung des Kartenkörpers verwendet.

Aus der DE 10 2005 030 626 A1 ist des Weiteren ein Sicherheits- oder Wertdokument bekannt, welches einen aus mehreren Lagen bestehenden Kartenkörper umfasst und ein Displaymodul aufweist, welches aus einer Chip-Substratlage besteht, auf welcher zumindest ein Displayelement und zumindest ein IC-Chip vorgesehen sind. Aus DE 199 63 165 C1 ist ein Dokument bekannt mit einem in einer Vertiefung des Kartenkörpers angeordneten Displayelement.

Aus der WO 03/034333 A1 ist ein Kartenkörper bekannt, der aus wenigstens zwei Folien besteht, deren Oberflächen planparallel sind. Auf einer Folie ist ein elektronisches Modul beispielsweise mit einem Kleber fixiert. Die zweite Folie weist eine Ausnehmung auf, damit das elektronische Modul in der Ausnehmung positioniert werden kann. Nach dem Aufbringen der zweiten Folie auf die erste Folie wird die Ausnehmung mit einem Füllstoff ausgefüllt.

Der Erfindung liegt die Aufgabe zugrunde, ein Sicherheits- oder Wertdokument sowie ein Verfahren zu dessen Herstellung vorzuschlagen, das eine einfache und sichere Herstellung eines mehrschichtigen Sicherheits- oder Wertdokumentes mittels Laminiertechnik ohne Zerstörung empfindlicher elektrischer Komponenten ermöglicht.

Diese Aufgabe wird durch ein Sicherheits- oder Wertdokument nach Anspruch 1 gelöst.

Diese Anordnung weist den Vorteil auf, dass eine weiche Einlagerung von mechanisch empfindlichen Bauteilen bei solchen Sicherheitsdokumenten ermöglicht ist. Zusätzlich kann eine Haftungsverbesserung zwischen dem Displaymodul und den weiteren Lagen des Kartenkörpers wie bspw. zumindest der Kartensubstratlage zumindest einer Ausgleichslage und zumindest einer opaken Lage mit einem dem Displayelement zugeordneten Fenster erzielt werden

Eine bevorzugte Ausgestaltung der Erfindung sieht vor, dass die Kompensationslage der Größe des Displayelementes des Displaymoduls entspricht. Dadurch kann über die gesamte Fläche des Displayelementes eine Kompensation im Hinblick auf die in dem Displaymodul aufliegenden Schichten, insbesondere im Bereich des Displayelementes, ermöglicht werden.

Des Weiteren ist bevorzugt vorgesehen, dass das Fenster der opaken Lage kleiner als das Displayelement des Displaymoduls ist und die Kompensationslage der Größe des Fensters der opaken Lage entspricht. Das Fenster der opaken Lage überdeckt dabei den Randbereich des Display-elementes, so dass ein vorbestimmtes Sichtfenster des Displayelementes freigegeben ist. Um eine besonders wirksame Vermeidung oder Abmilderung einer Delle in der Drucklage zu erzielen, erstreckt sich die Kompensationslage entsprechend der Größe beziehungsweise der Abmessung des Fensters in der opaken Lage.

Eine weitere bevorzugte Ausgestaltung des Sicherheits- oder Wertdokumentes sieht vor, dass die Kompensationslage auf der Karten-Substratlage aufgebracht ist. Dadurch kann die Kompensationslage bevorzugt gleichzeitig mit der Antenne, jedoch auch vor oder nach der Antenne, auf die Karten-Substratlage aufgebracht werden, sofern eine Antenne zum Aufbringen auf die Karten-Substratlage vorgesehen ist.

Alternativ kann die Kompensationslage auch auf der Chip-Substratlage dem Displayelement gegenüberliegend aufgebracht sein. Des Weiteren kann die Kompensationslage auch als eine separate Lage ausgebildet sein, welche zwischen der Karten-Substratlage und der Chip-Substratlage positioniert wird.

Des Weiteren ist die Kompensationslage bevorzugt eine aufgedruckte, auflaminierte, geheftete oder aufgeklebte Schicht. Bevorzugt wird die Kompensationslage als Schicht auf die Karten-Substratlage aufgedruckt. Dadurch kann diese ebenso wie die Antenne auf die Karten-Substratlage aufgedruckt werden, sofern die Antenne nicht im Displaymodul integriert ist. Alternativ zur Auflaminierung und Heftung oder dem Aufkleben einer weiteren Schicht kann auch ein Ätzverfahren vorgesehen sein, so dass in Analogie zur Herstellung der Antenne diese Kompensationslage hergestellt werden kann.

Gemäß einer ersten Alternative ist vorgesehen, dass die Dicke der Kompensationslage der Dicke der opaken Lage entspricht. Gemäß einer weiteren Alternative kann vorgesehen sein, dass die Dicke der Kompensationslage geringer als die Dicke der opaken Lage ist, wobei vorzugsweise die Kompensationslage in einem Bereich von bis zu 20 % eine geringere Dicke als die opake Lage aufweist. Dadurch kann eine hinreichende Vermeidung einer Eindellung im Bereich des Fensters der opaken Lage erzielt werden, wobei gleichzeitig eine geringere Schichtdicke der Kompensationslage erforderlich ist.

Bevorzugt weist die Chip-Substratlage einen zur Karten-Substratlage weisenden Anschluss auf, der mit einem Anschlussende der Antenne, die auf der Karten-Substratlage aufgebracht ist, kontaktierbar ist. Dadurch kann eine einfache Kontaktierung des Displaymoduls ermöglicht werden, wobei die elektrische Verbindung beispielsweise durch ein Lot oder isotrop oder anisotrop leitende Klebstoffe (Isotrop Conductive Adhesive - ICA, Anisotrop Conductive Adhesive - ACA, Anisotrop Conductive Film - ACF) ermöglicht ist.

Nach einer alternativen Ausführungsform der Erfindung ist die Antenne auf der Chip-Substratlage des Displaymoduls vorgesehen oder im Displaymodul integriert. Dadurch ist ein einfaches Einbringen ermöglicht, ohne dass zusätzlich eine Kontaktierung von Anschlussenden der Antenne erforderlich ist, sofern die Antenne auf der Karten-Substratlage aufgebracht ist.

Das Sicherheits- oder Wertdokument umfasst bevorzugt zumindest eine erste Ausgleichslage mit einem Fenster zur Aufnahme der Chip-Substratlage und zumindest eine weitere Ausgleichslage mit einem Fenster, in welchem zumindest das eine Displayelement und der zumindest eine IC-Chip vorgesehen sind. Dadurch kann eine exakte Anpassung sowohl an die Dicke der Chip-Substratlage als auch an die Aufbauhöhe der einzelnen elektronischen Komponenten ermöglicht werden, so dass unter Beibehaltung des prinzipiellen Aufbaus des Kartenkörpers unterschiedliche Displaymodule verwendet werden können.

Des Weiteren ist bevorzugt vorgesehen, dass zwischen der Chip-Substratlage und der opaken Lage zumindest eine weitere Ausgleichslage vorgesehen ist, welche vorzugsweise das Displaymodul teilweise oder vollständig überdeckt. Diese weitere Ausgleichslage ist in diesem Bereich zumindest transparent ausgebildet. Die Ausgleichslage kann sich über den gesamten Kartenkörper erstrecken. Durch einen solchen Schichtaufbau des Sicherheits- oder Wertdokumentes, welches um diese weitere Ausgleichslage ergänzt ist, wird des Weiteren ermöglicht, dass einem Einsinken der Drucklage im Bereich des Displayelementes aufgrund des Fensters der opaken Lage entgegengewirkt wird. Dies bedeutet, dass einer Eindellung der Drucklage beziehungsweise einer Strapazierung des Displayelementes durch die zumindest eine Kompensationslage entgegengewirkt wird. Somit kann eine Kompensation des Höhenunterschiedes im Bereich des Fensterausschnittes der opaken Lage erzielt werden, wodurch während der Lamination der einzelnen Schichten zu einem gemeinsamen Kartenkörper quasi durchgängig gleiche Schichtdicken geschaffen werden, so dass eine Zerstörung der empfindlichen elektrischen Komponenten, insbesondere des Displayelementes, vermieden wird.

Eine weitere bevorzugte Ausgestaltung der Erfindung sieht vor, dass zumindest eine erste Drucklage vorgesehen ist, welche auf der opaken Lage aufgebracht ist. Diese erste Drucklage erstreckt sich bevorzugt über den gesamten Kartenkörper und kann anwendungsspezifisch ausgebildet sein. Bspw. kann diese erste Drucklage durch eine Folie ausgebildet werden, welche zumindest teilweise bedruckt ist. Alternativ kann diese erste Drucklage auch durch eine Farbschicht ausgebildet werden. Des Weiteren ist bevorzugt vorgesehen, dass die einzelnen Lagen des Kartenkörpers aus PC (Polycarbonat) bestehen. Dadurch kann besonders bevorzugt ein quasi-monolithischer Block eines Kartenkörpers gebildet werden. Alternativ kann auch vorgesehen sein, dass beispielsweise einzelne Lagen aus PVC (Polyvinylchlorid) und jeweils äußere Lagen aus PC (Polycarbonat) bestehen, um einen Kartenkörper zur Lamination auszubilden.

Zur Verbindung der einzelnen Lagen und/oder Schichten bei einem Kartenkörper für ein Sicherheits- oder Wertdokument ist bevorzugt vorgesehen, dass jeweils ein- oder beidseitig reaktive Klebeschichten auf die einzelnen Lagen und/oder Schichten aufgebracht werden, so dass diese durch eine Klebeverbindung miteinander verbindbar sind. Bevorzugt werden dabei bspw. Polyisocyanate oder isocyanatreaktive Polymere eingesetzt.

Die der Erfindung zugrunde liegende Aufgabe wird des Weiteren durch ein Verfahren zur Herstellung eines Sicherheits- oder Wertdokumentes nach Anspruch 12 gelöst.

Dieses Verfahren weist den Vorteil auf, dass herkömmliche Produktionsanlagen zur Lamination von Sicherheits- oder Wertdokumenten weiterhin verwendet werden können, um solche erfindungsgemäße Sicherheits- oder Wertdokumente herzustellen. Darüber hinaus bleibt auch weiterhin die Möglichkeit der Verwendung von typischen Sicherheitsdokumentenarchitekturen beziehungsweise das Einbringen von Sicherheitsmerkmalen in die einzelnen Schichten beziehungsweise Lagen aufrechterhalten.

Des Weiteren ist bevorzugt vorgesehen, dass zwischen der Chip-Substratlage und der opaken Lage zumindest eine weitere Ausgleichslage positioniert wird. Eine solche Ausgleichslage kann transparent ausgebildet sein und sich beispielsweise vollständig über den gesamten Kartenkörper erstrecken. Des Weiteren kann vorgesehen sein, dass auf einer Außenseite der opaken Lage zumindest eine erste Drucklage positioniert wird. Eine solche Drucklage kann eine Druckfolie sein. Alternativ kann auch vorgesehen sein, dass beide Lagen zur Bildung des Stapels zugeführt werden. Vorzugsweise kann auch eine weitere Drucklage auf der gegenüberliegenden Seite der Karten-Substratlage dem Stapel zugeführt werden.

Bevorzugt wird auf die Karten-Substratlage oder auf die dem Display-element gegenüberliegende Seite der Chip-Substratlage die zumindest eine Kompensationsschicht aufgebracht. Dies weist insbesondere für den Fall des Aufbringens einer Antenne auf die Karten-Substratlage den Vorteil auf, dass im gleichen oder in einem vorausgehenden oder nachgeschalteten Arbeitsgang zum Aufbringen der Antenne die Kompensationslage auf die Karten-Substratlage aufgebracht werden kann. Somit kann ein bereits hergestelltes Displaymodul unmittelbar weiter verarbeitet werden.

Des Weiteren wird auf die Karten-Substratlage bevorzugt eine Antenne aufgebracht, insbesondere aufgedruckt, und wird beim Positionieren des Displaymoduls auf der Karten-Substratlage über Anschlüsse kontaktiert. Dadurch kann ein einfaches Zusammenfügen vom Displaymodul zur Karten-Substratlage und ein Anschließen der Antenne ermöglicht werden. Sofern die Antenne auf die Karten-Substratlage aufgebracht, insbesondere aufgedruckt, wird, kann bevorzugt gleichzeitig auch die Kompensationslage auf die Karten-Substratlage aufgebracht werden.

Des Weiteren wird der aus mehreren Lagen gebildete Stapel bevorzugt in einer Heiz-Kühl-Presse in zumindest einem Heiz- und Kühlpresszyklus zu einem Kartenkörper laminiert. Bei dieser Laminiertechnik in einer Heiz-Kühl-Presse wird zunächst ein Heizpresszyklus bei einer Temperatur von etwa 60 °C bis 320 °C, bevorzugt 80 °C bis 280 °C, weiter bevorzugt 90 °C bis 250 °C, unter Erwägung von 80 °C bis 145 °C, bevorzugt 90 °C bis 135 °C, ferner bevorzugt 100 °C bis 230 °C, bei Polycarbonat und/oder PVC (Polyvinlychlorid) und/oder PET (Polyethylenterephthalat), wobei auch einzelne einstellbare Temperaturwerte wie etwa 80 °C, 100 °C, 105 °C, 110 °C, 160 °C, 165 °C, 170 °C, 190 °C, 200 °C, 210 °C, 220 °C oder 230 °C erwogen werden, und bei einem Druck von 35 N/cm² bis 500 N/cm², bevorzugt 40 N/cm² bis 450 N/cm², weiter bevorzugt 40 N/cm² bis 210 N/cm², unter Erwägung von 40 N/cm² bis 180 N/cm², alternativ 80 N/cm² bis 220 N/cm², weiter bevorzugt 40 N/cm² bis 110 N/cm², alternativ 90 N/cm² bis 160 N/cm²,angesteuert und anschließend ein Kaltpresszyklus mit einem - vorzugsweise etwas höher liegendem - Druck von 80 N/cm² bis 800 N/cm², bevorzugt von 90 N/cm² bis 700 N/cm², von 100 N/cm² bis 700 N/cm², wobei alternativ von 200 N/cm² bis 750 N/cm² erwogen wird, ferner bevorzugt 200 N/cm² bis 250 N/cm², wobei alternativ ferner bevorzugt 100 N/cm² bis 150 N/cm², angesteuert. Dabei betragen die Zykluszeiten jeweils zwischen 0,5 min bis 30 min, bevorzugt jeweils 10 min bis 20 min, alternativ bevorzugt jeweils 1 min bis 3 min, ferner alternativ bevorzugt jeweils 5 min bis 15 min.

Nach dem Laminieren zu einem quasi-monolithischen Block werden die einzelnen Lagen bevorzugt gestanzt und können personalisiert werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht auf ein Sicherheits- oder Wertdokument,
- Figur 2: eine schematische Schnittansicht entlang der Linie A-A in Figur 1,
- Figur 3: ein Ablaufdiagramm zur Herstellung eines Sicherheits- oder Wertdokumentes in Figur 1,
- Figur 4: eine schematische Ansicht auf eine alternative Ausführungsform eines Sicherheits- und Wertdokumentes zu Figur 1 und
- Figur 5: eine schematische Schnittansicht entlang der Linie B-B in Figur 4.

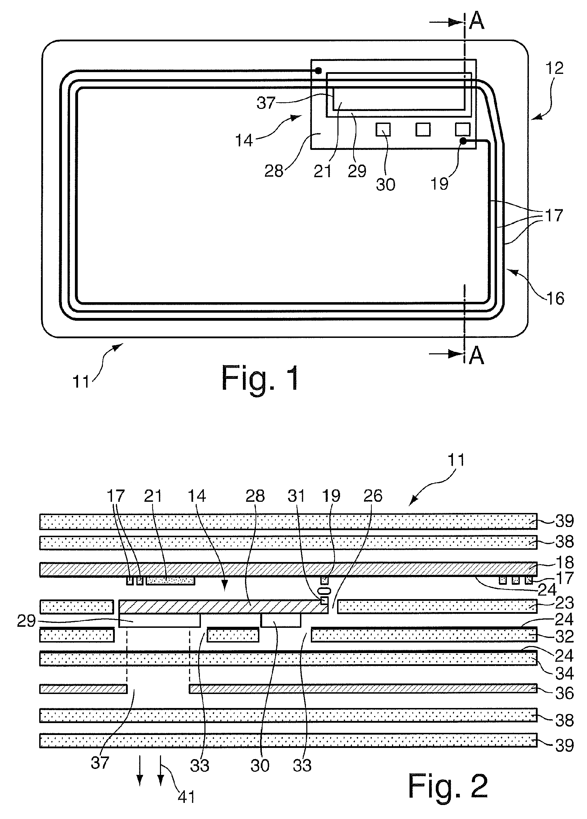

In Figur 1 ist eine schematische Ansicht von oben auf ein Sicherheits- oder Wertdokument 11 dargestellt, welches einen Kartenkörper 12 mit einem Displaymodul 14 umfasst. Das Displaymodul 14 ist mit einer Antenne 16 im Kartenkörper 12 kontaktiert.

In Figur 2 ist eine schematische Schnittansicht entlang der Linie A-A in Figur 1 dargestellt. Anhand dieser Schnittansicht wird nachfolgend der beispielhaft dargestellte Schichtaufbau des Sicherheits- oder Wertdokumentes 11 näher beschrieben.

Auf einer Karten-Substratlage 18 ist die Antenne 16 aufgebracht. Diese wird vorzugsweise aufgedruckt. Zwischen äußeren Windungen 17 ist ein Anschlussende 19 vorgesehen, welches zur elektrischen Verbindung der Antenne 16 mit einem Anschluss 31 des Displaymoduls 14 ausgebildet ist. Auf der Karten-Substratlage 18 ist des Weiteren zumindest eine Kompensationslage 21 vorgesehen, welche bevorzugt wie die Antenne 16 als Schicht aufgedruckt ist. Auf der Karten-Substratlage 18 ist dem Displaymodul 14 und einer ersten Ausgleichslage 23 zuweisend bevorzugt eine reaktive Klebeschicht 24 aufgebracht.

Die erste Ausgleichslage 23 umfasst ein Fenster 26, das eine Chip-Substratlage 28 des Chipmoduls 14 umgibt. Die Chip-Substratlage 28 dient als Trägerschicht für zumindest ein Displayelement 29 sowie für zumindest einen IC-Chip 30. Beim Displayelement 29 kann es sich um eine elektrophoretische Anzeige handeln. Weitere Ausgestaltungen, wie beispielsweise eine elektrochrome Anzeige, Drehelementanzeige, LED-Anzeige, OLED-Anzeige, Flüssigkristallanzeige (LCD), interferrometrische Modulator-Anzeige (IMOD), Electrowetting-Anzeige, in verschiedenen Ausführungsformen sowie weitere Arten können ebenso vorgesehen sein.

Der ersten Ausgleichslage 23 ist bevorzugt eine zweite Ausgleichslage 32 zugeordnet, welche Fenster 33 umfasst, in welchen die elektronischen Komponenten dieses Displaymoduls 14 positioniert sind. Die Dicke der ersten Ausgleichslage 23 ist bevorzugt an die Chip-Substratlage 28, und die Dicke der zweite Ausgleichslage 32 ist bevorzugt an die Höhe des Displayelementes 29 und/oder IC-Chips 30 angepasst. Alternativ können zur Einbettung des Displaymoduls 14 auch mehrere Ausgleichslagen vorgesehen sein. Auf der ersten und/oder zweiten Ausgleichslage 23, 32 ist bevorzugt eine reaktive Kleberschicht 24 vorgesehen.

Der zweiten Ausgleichslage 32 zugeordnet ist bevorzugt eine weitere Ausgleichslage 34 vorgesehen, welche sich im Wesentlichen über die gesamte Fläche des Kartenkörpers 12 erstreckt. Diese ist zumindest im Bereich des Displayelementes 29 transparent ausgebildet. Diese weitere Ausgleichslage 34 kann sich auch nur teilweise über die Fläche des Kartenkörpers 12 erstrecken. Auf dieser Ausgleichslage 34 ist bevorzugt eine reaktive Kleberschicht 24 vorgesehen. Diese kann auch an der zweiten Ausgleichslage 32 der Ausgleichslage 34 zugeordnet vorgesehen sein.

Dieser Ausgleichslage 34 ist wiederum eine opake Lage 36 zugeordnet, welche ein Fenster 37 umfasst, dessen Größe der Größe des Displayelementes 29 entspricht beziehungsweise bevorzugt einen Randbereich des Displayelementes 29 überdeckt, so dass ausschließlich die Anzeige des Displayelementes 29 freigegeben ist. Auf diese opake Lage 36 wird zumindest eine erste Drucklage 38 aufgebracht. Diese erste Drucklage 38 kann als Folie oder aufgebrachte Farbschicht ausgebildet sein. Auf der gegenüberliegenden Seite kann auf die Karten-Substratlage 18 eine zweite Drucklage 38 aufgebracht sein, welche der ersten entspricht oder auch davon abweichend ausgestaltet sein kann. Ergänzend können jeweils an den Außenseiten zusätzlich eine erste und zweite Overlayfolie 39 als Schutz- oder Deckschichten aufgebracht sein. Diese erste Overlayfolie 39 kann wie die erste Druckfolie 38 transparent ausgebildet sein, so dass eine Austrittsrichtung der Anzeige des Displayelementes 29 gemäß den Pfeilen 41 gegeben ist. Auch die zweite Drucklage 38 und zweite Overlayfolie 39 kann transparent ausgebildet sein.

Die Kompensationslage 21 entspricht in ihrer Abmessung im Wesentlichen dem Displayelement 29. Die Höhe der Kompensationslage 21 entspricht der Dicke der opaken Lage 36 oder ist geringfügig dünner ausgebildet. Durch das Anordnen der Kompensationslage 21 zwischen dem Displaymodul 14 und der Karten-Substratlage 18, insbesondere im Bereich des Fensters 37 der opaken Lage 36 im Kartenkörper 12 zwischen dem Chipmodul 14 und der Karten-Substratlage 18, wird einer Eindellung der ersten Drucklage 38 im Bereich des Fensters 37 der opaken Lage 36 und ggf. der ersten Overlayfolie 39 entgegengewirkt. Diese Kompensationslage 21 dient zum Ausgleich des Höhenunterschiedes des Fensterausschnittes in der opaken Lage 36.

Zwischen den einzelnen Lagen und Schichten des vorbeschriebenen Schichtaufbaus gemäß Figur 2 können jeweils ein- oder beidseitig reaktive Klebeschichten 24 vorgesehen sein. Die reaktiven Kleberschichten 24 können durch Polyisocyanate, isocyanatreaktive Polymere ausgebildet sein.

Die einzelnen Lagen des Schichtaufbaus bestehen bevorzugt aus thermoplastisch verarbeitbaren Kunststoffen, wobei bevorzugt Polycarbonat eingesetzt wird. Alternativ können auch Polyethylenterephthalat und dessen Derivate, thermoplastische Polyurethane, Polyvinylchlorid, Acrylnitril-Butadien-Styrol oder Verbundmaterialien eingesetzt werden.

Das Displaymodul 14 kann weitere nicht näher dargestellte Elemente beziehungsweise Komponenten enthalten, wie zum Beispiel einen Kontaktpad für kontaktbehaftete Kommunikation und Energieversorgung, Schnittstellen für die Modulprüfung, Eingabeelemente wie zum Beispiel kapazitive Berührungssensoren, optische Sensoren, sowie Sicherheitselemente. Bei dem IC-Chip 30 kann es sich beispielsweise um einen Kryptoprozessor handeln. Des Weiteren kann ein Treiber-IC vorgesehen sein. Als Chip-Substratlage 28 kann beispielsweise ein Epoxidharz, ein Polyimid oder dergleichen vorgesehen sein.

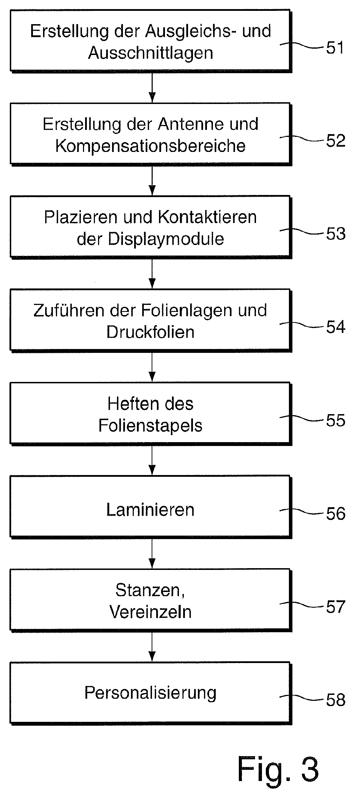

In Figur 3 ist ein bevorzugter Prozessablauf zur Herstellung eines Sicherheitsdokumentes 11 gemäß den Figuren 1 und 2 dargestellt.

In einem ersten Arbeitsschritt 51 werden die Ausgleichslagen 23, 32 mit Fenstern 26, 33 als auch die Ausgleichslage 34 sowie die opake Lage 36 mit Fenster hergestellt. In einem zweiten Arbeitsschritt wird auf die Karten-Substratlage 18 die Antenne 16 aufgebracht, beispielsweise bevorzugt mittels Siebdruck einer Silberleitpaste. Alternativ erfolgt die Herstellung der Antenne mittels selektivem Ätzen, galvanischer Abscheidung oder Laserablation von Metallschichten wie Kupfer, Aluminium, Gold. Ergänzend wird die zumindest eine Kompensationslage 21 aufgebracht, wobei diese ebenso in einem Druckschritt wie die Antenne 16 aufgebracht werden kann. Die Kompensationslage 21 kann in Analogie zur Antenne 16 ebenso aus einer Silberleitpaste oder aus weiteren Schichtmaterialien bestehen. Die Kompensationsschicht 21 kann aus thermisch, UV-, IR-trocknenden Materialien oder aus 1K/2K Epoxidharz-Materialien, besonders bevorzugt aus druckbaren Materialien bestehen.

In einem nachfolgenden Arbeitsschritt 53 wird das Displaymodul 14 zur Karten-Substratlage 18 positioniert. Der Anschluss 19 der Antenne 16 wird mit dem Anschluss 31 des Displaymoduls 14 elektrisch verbunden. Anschließend werden im Arbeitsschritt 54 die Ausgleichslagen 23 und 32 zugeführt. Darauffolgend werden die Ausgleichslage 34 und die opake Lage 36 aufgelegt und nachfolgend erste und zweite die Drucklage 38 zur opaken Lage 36 aufgebracht. Gegebenenfalls werden noch weitere Drucklagen 38 und/oder beispielsweise eine Overlayfolie 39 zu einem Stapel positioniert. Im darauffolgenden Arbeitsschritt 55 werden die einzelnen Lagen bevorzugt geheftet. Diese können auch aufgrund einer vorzugsweise zwischen jeder Lage vorgesehenen latentreaktiven Klebeschicht 24 miteinander verklebt werden. Hierbei kann auch nur eine punktuelle Klebung, eine linienförmige oder streifenförmige Klebung vorgesehen sein.

Anschließend erfolgt im Arbeitsschritt 56 die Lamination der einzelnen Schichten. Hierbei wird eine Heiz-Kühl-Presse eingesetzt, welche zunächst in einem Heizpresszyklus arbeitet. Dabei wird bei einer Temperatur von etwa 170 °C bis 210 °C, bevorzugt 200 °C, ein Druck von 40 N/cm² bis 500 N/cm², aufgebracht. In einem anschließenden Kaltpresszyklus werden Drücke von 100 N/cm² bis 700 N/cm² auf die Lagen aufgebracht. Die jeweiligen Zykluszeiten betragen in Abhängigkeit der eingesetzten Materialien zwischen 0,5 min bis 30 min. Nach dem Laminieren erfolgt in dem Arbeitsschritt 57 ein Stanzen und Vereinzeln der einzelnen Kartenkörper 12. Üblicherweise werden Mehrfachnutzen in einem Bogen hergestellt, welche nach dem Ausstanzen vereinzelt werden.

In einem weiteren Arbeitsschritt 58 können die vereinzelten Sicherheitsdokumente 11 personalisiert werden. Dabei kann sowohl eine elektronische Speicherung von personalisierten Daten erfolgen als auch ein Beschriften oder Bedrucken des Kartenkörpers 12 vorgesehen sein.

Die in den Arbeitsschritten 51 bis 57 beschriebenen Arbeitsschritte können bei herkömmlichen Produktionsanlagen, welche zur Lamination von solchen Sicherheitsdokumenten 11 bislang verwendet wurden, ebenso eingesetzt werden. Darüber hinaus können in die einzelnen Lagen oder Schichten als auch dazwischen entsprechende Sicherheitsmerkmale bekannter Art eingebracht werden beziehungsweise vorgesehen sein. Beispielsweise können das Guilloschen, ein Irisdruck, ein Durchsichtspasser oder dergleichen vorgesehen sein. Diese beispielhafte Aufzählung der Sicherheitsmerkmale ist nicht abschließend.

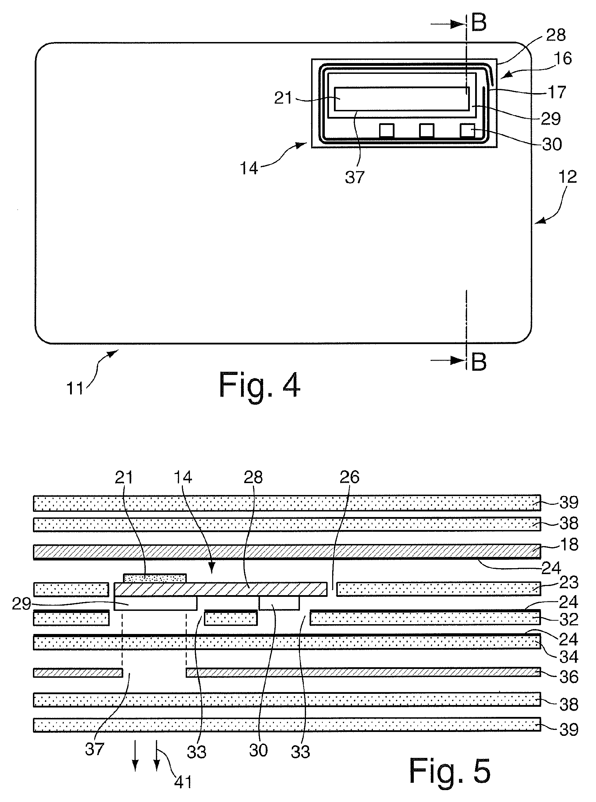

In Figur 4 ist eine schematische Ansicht auf eine alternative Ausführungsform des Sicherheits- oder Wertdokumentes 11 zu Figur 1 dargestellt. Diese Ausführungsform in Figur 4 unterscheidet sich zu der in Figur 1 nur dadurch, dass die Antenne 16 nicht auf der Karten-Substratlage 18, sondern auf der Chip-Substratlage 28 des Displaymoduls 14 aufgebracht beziehungsweise integriert ist. Dies weist den Vorteil auf, dass eine zusätzliche Kontaktierung der Anschlussenden der auf der Karten-Substratlage 18 aufgebrachten Antenne 16 mit Anschlussstellen 31 des Displaymoduls 14 nicht mehr erforderlich ist.

In Figur 5 ist eine schematische Schnittdarstellung entlang der Linie B-B in Figur 4 dargestellt. Der prinzipielle Aufbau des Sicherheits- oder Wertdokumentes 11 entspricht dem in Figur 2. Da die Antenne 16 im Displaymodul 14 integriert ist, entfallen die Anschlussstellen 31. Da auf die Karten-Substratlage 18 keine Antenne 16 aufgebracht wird, ist es von Vorteil, dass auf einer dem Displayelement 29 gegenüberliegenden Seite der Chip-Substratlage 28 die Kompensationslage 21 aufgebracht ist. Alternativ kann diese Kompensationslage 21 auch auf der Karten-Substratlage 18 vorgesehen sein, wie dies in Figur 2 dargestellt ist. Ebenso kann diese Kompensationslage 21 als Zwischenlage zwischen die Karten-Substratlage 18 und die Chip-Substratlage 28 eingelegt und positioniert werden.

Im Übrigen entspricht der Aufbau des Sicherheits- oder Wertdokumentes 11 in Figur 5 dem in Figur 2, worauf vollumfänglich Bezug genommen wird.

Das Verfahren zur Herstellung eines solchen Sicherheits- oder Wertdokumentes 11 gemäß den Figuren 4 und 5 entspricht dem in Figur 3 beschriebenen Verfahren mit der Ausnähme, dass der Schritt 52, die Erstellung der Antenne 18 und der Kompensationsbereiche auf der Karten-Substratlage 18, entfallen kann, da die Antenne im Displaymodul 14 integriert und auf der Chip-Substratlage 28 bevorzugt auch die Kompensationslage 21 angeordnet ist. Sollte diese Kompensationslage 21 auf der Chip-Substratlage 28 nicht vorgesehen sein, ist dieser Schritt 52 wiederum insoweit erforderlich, als die Erstellung des Kompensationsbereiches 21 auf der Karten-Substratlage 18 durchgeführt wird.

## Patentansprüche

1. Sicherheits- oder Wertdokument, welches einen aus mehreren Lagen bestehenden Kartenkörper (12) umfasst, mit einem Displaymodul (14) bestehend aus einer Chip-Substratlage (28), auf welcher ein Displayelement (29) und ein IC-Chip (30) vorgesehen sind, **dadurch gekennzeichnet, dass** der Schichtaufbau des Kartenkörpers (12) weiterhin umfasst:
- eine Karten-Substratlage (18) und eine darauf aufgebrachte Ausgleichslage (23) mit zumindest einem Fenster (26), in welchem die Chip-Substratlage (28) des Displaymoduls (14) positioniert ist,
- und
- eine auf die Ausgleichslage (23) und die Chip-Substratlage (28) aufgebrachte opake Lage (36), welche für das Displayelement (29) ein Fenster (37) umfasst, das dem Displayelement (29) zugeordnet ist, und
- eine Kompensationslage (21), welche im Bereich des Displayelementes (29) zwischen der Karten-Substratlage (18) und der Chip-Substratlage (28) vorgesehen ist.

2. Dokument nach Anspruch 1, **dadurch gekennzeichnet, dass** die Kompensationslage (21) der Größe des Displayelementes (29) des Displaymoduls (14) entspricht.

3. Dokument nach Anspruch 1, **dadurch gekennzeichnet, dass** das Fenster (37) der opaken Lage (36) kleiner als das Displayelement (29) ist und die Kompensationslage (21) der Größe des Fensters (37) in der opaken Lage (36) entspricht.

4. Dokument nach Anspruch 1, **dadurch gekennzeichnet, dass** die Kompensationslage (21) auf der Karten-Substratlage (18) oder dem Displayelement (29) gegenüberliegend auf der Chip-Substratlage (28) aufgebracht oder als separate Kompensationslage (21) ausgebildet ist.

5. Dokument nach Anspruch 1, **dadurch gekennzeichnet, dass** die Kompensationslage (21) als eine aufgedruckte, auflaminierte, geheftete oder aufgeklebte Schicht ausgebildet ist.

6. Dokument nach Anspruch 1, **dadurch gekennzeichnet, dass** die Dicke der Kompensationslage (21) der Dicke der opaken Lage (36) entspricht oder dass die Dicke der Kompensationslage (21) geringer als die Dicke der opaken Lage (36) ist, vorzugsweise um bis zu 20 % dünner als die Dicke der opaken Lage (36) ausgebildet ist.

7. Sicherheitsdokument nach Anspruch 1, **dadurch gekennzeichnet, dass** die Chip-Substratlage (28) einen zur Karten-Substratlage (18) weisenden Anschluss (31) aufweist, der mit einem Anschluss (19) einer auf der Karten-Substratlage (18) angeordneten Antenne (16) kontaktierbar ist und vorzugsweise auf oder in der Chip-Substratlage (28) des Displaymoduls (14) eine Antenne (16) angeordnet ist.

8. Dokument nach Anspruch 1, **dadurch gekennzeichnet, dass** zumindest eine weitere Ausgleichslage (32) mit zumindest einem Fenster (33) zur Aufnahme des Displayelementes (29) und des IC-Chips (30) vorgesehen ist.

9. Sicherheitsdokument nach Anspruch 1, **dadurch gekennzeichnet, dass** zwischen der Chip-Substratlage (28) und der opaken Lage (36) zumindest eine weitere Ausgleichslage (34) vorgesehen ist, welche vorzugsweise das Displaymodul (14) zumindest teilweise überdeckt und vorzugsweise zumindest eine erste Drucklage (38) vorgesehen ist, welche auf der opaken Lage (36) dem Displaymodul (14) gegenüberliegend angeordnet ist.

10. Dokument nach einem der vorhergehenden Ansprüche, **dadurch gekennzeichnet, dass** die Lagen des Kartenkörpers (12) aus PC (Polycarbonat) oder aus einem PVC (Polyvinylchlorid) mit jeweils einer äußeren Lage aus PC (Polycarbonat) bestehen.

11. Dokument nach Anspruch 1, **dadurch gekennzeichnet, dass** zwischen den einzelnen Lagen und/oder Schichten jeweils ein- oder beidseitig reaktive Klebeschichten (24) vorgesehen sind, welche durch Polyisocyanate, isocyanatreaktive Polymere ausgebildet sind.

12. Verfahren zur Herstellung eines Sicherheits- oder Wertdokumentes (11) gemäß einem der Ansprüche 1 bis 11, **dadurch gekennzeichnet,**
- **dass** eine Karten-Substratlage (18) bereitgestellt wird,
- **dass** zumindest eine Ausgleichslage (23) mit Fenster (26) und zumindest eine opake Lage (36) mit Fenster (37) hergestellt wird,
- **dass** eine Chip-Substratlage (28) des Displaymoduls (14) und die Karten-Substratlage (18) zueinander und dazwischen liegend zumindest eine Kompensationslage (21) positioniert werden,
- **dass** die Karten-Substratlage (18) mit der darauf angeordneten Chip-Substratlage (28), die zumindest eine Ausgleichslage (23) mit einem Fenster (26) und die opake Lage (36) mit Fenster (37) zu einem Stapel zusammengeführt werden,
- **dass** die Lagen des Stapels geheftet und anschließend gemeinsam laminiert werden.

13. Verfahren nach Anspruch 12, **dadurch gekennzeichnet, dass** zwischen der Chip-Substratlage (28) und der opaken Lage (36) zumindest eine weitere Ausgleichslage (34) positioniert wird oder auf eine Außenseite der opaken Lage (36) zumindest eine erste Drucklage (38) positioniert oder beide im Stapel positioniert werden.

14. Verfahren nach Anspruch 12, **dadurch gekennzeichnet, dass** auf die Karten-Substratlage (18) oder auf die dem Displayelement (29) gegenüberliegenden Seite der Chip-Substratlage (28) die zumindest eine Kompensationsschicht (21) aufgebracht wird und vorzugsweise auf die Karten-Substratlage (18) eine Antenne (16) aufgebracht und beim Positionieren des Displaymoduls (14) auf der Karten-Substratlage (18) die Antenne (16) über Anschlussstellen (19, 31) kontaktiert wird.

15. Verfahren nach Anspruch 12, **dadurch gekennzeichnet, dass** der Stapel in einer Heiz-Kühl-Presse in einem Heiz-Kühl-Presszyklus laminiert wird und vorzugsweise zu einem monolithischen Block zusammen gepressten Lagen gestanzt und vorzugsweise personalisiert werden.

## Claims

1. Security document or document of value, which comprises a card body (12) consisting of several layers, and at least one display module (14) with a chip substrate layer (28), on which at least one display element (29) and at least one IC chip (30) is provided, **characterised in that** the layer structure of the card body (12) further comprises:
- a card substrate layer (18) and at least one compensation layer (23) applied thereto, having at least one window (26), in which at least one chip substrate layer (28) of the display module (14) is positioned,
- and
- one opaque layer (36) applied to the equalization layer (23) and the chip substrate layer (28), said opaque layer comprising a window (37) for the one display element (29), said window being allocated to the display element (29), and
- a compensation layer (21), which is provided in the region of the display element (29) between the card substrate layer (18) and the chip substrate layer (28).

2. Security document according to claim 1, **characterised in that** the compensation layer (21) corresponds to the size of the display element (29) of the display module (14).

3. Security document according to claim 1, **characterised in that** the window (37) of the opaque layer (36) is smaller than the display element (29) and the compensation layer (21) corresponds to the size of the window (37) in the opaque layer (36).

4. Security document according to claim 1, **characterised in that** the compensation layer (21) is applied to the chip substrate layer (28) opposite the card substrate layer (18) or the display element (29) or is designed as a separate compensation layer (21).

5. Security document according to claim 1, **characterised in that** the compensation layer (21) is designed as a printed, laminated, stitched or adhered layer.

6. Security document according to claim 1, **characterised in that** the thickness of the compensation layer (21) corresponds to the thickness of the opaque layer (36) or that the thickness of the compensation layer (21) is designed to be less than the thickness of the opaque layer (36), preferably up to 20% thinner than the thickness of the opaque layer (36).

7. Security document according to claim 1, **characterised in that** the chip substrate layer (28) has a contact (31) facing the card substrate layer (18), which is contactable with a contact (19) of antenna (16) arranged on the card substrate layer (18) and preferably an antenna (16) is arranged on or in the chip substrate layer (28) of the display module (14).

8. Security document according to claim 1, **characterised in that** at least one further equalization layer (32) having at least one window (33) for receiving the display element (29) and the IC chip (30) is provided.

9. Security document according to claim 1, **characterised in that** at least one further equalization layer (34) is provided between the chip substrate layer (28) and the opaque layer (36), said equalization layer (39) preferably covering the display module (14) at least partially and preferably at least one first print layer (38) is provided, which is arranged on the opaque layer (36) opposite the display module (14).

10. Security document according to one of the preceding claims, **characterised in that** the layers of the card body (12) consist of PC (polycarbonate) or of PVC (polyvinyl chloride) with a respective outer layer made from PC (polycarbonate).

11. Security document according to claim 1, **characterised in that** respective adhesive layers (24) that are reactive on one or both sides are provided between the individual layers, which are formed from polyisocyanates, isocyanate-reactive polymers.

12. Method for the production of a security document or document of value (11) according to one of claims 1 to 11, **characterised in that**,
- a card substrate layer (18) is provided,
- at least one equalization layer (23) with a window (26), and at least one opaque layer (36) with a window (37), is produced,
- a chip substrate layer (28) of the display module (14) and the card substrate layer (18) are positioned with respect to each other and at least one compensation layer (21) is positioned between them,
- the card substrate layer (18) with the chip substrate layer (28) arranged thereon, the at least one equalization layer (23) with at least one window (26) and the opaque layer (36) with a window (37) are combined to form a stack,
- the layers of the stack are stitched and then laminated together.

13. Method according to claim 12, **characterised in that** at least one further equalization layer (34) is positioned between the chip substrate layer (28) and the opaque layer (36) or at least one first print layer (38) is positioned onto an outer side of the opaque layer (36), or both are positioned in the stack.

14. Method according to claim 12, **characterised in that** the at least one compensation layer (21) is applied to the card substrate layer (18) or to the side of the chip substrate layer (28) that lies opposite the display element (29) and preferably an antenna (16) is applied to the card substrate layer (18) and the antenna (16) is contacted via contact points (19, 31) during the positioning of the display module on the card substrate layer (18).

15. Method according to claim 12, **characterised in that** the stack is laminated in a hot/cold press in a hot/cold press cycle and preferably the layers pressed together into a monolithic block are stamped and preferably personalised.

## Revendications

1. Document de sécurité ou de valeur qui comprend un corps de carte (12) composé de plusieurs couches, un module d'affichage (14) composé d'une couche de substrat de puce (28) sur laquelle sont prévus un élément d'affichage (29) et une puce IC (30), **caractérisé en ce que** la structure en couches du corps de carte (12) comprend en outre:
- une couche de substrat de carte (18) et, appliquée sur celle-ci, une couche de compensation (23) avec au moins une fenêtre (26) dans laquelle est positionnée la couche de substrat de puce (28) du module d'affichage (14), et
- appliquée sur la couche de compensation (23) et la couche de substrat de puce (28), une couche opaque (36) qui comprend, pour l'élément d'affichage (29), une fenêtre (37) qui est affectée à l'élément d'affichage (29), et
- une couche compensatoire (21) qui est prévue dans la zone de l'élément d'affichage (29), et ce entre la couche de substrat de carte (18) et la couche de substrat de puce (28).

2. Document selon la revendication 1, **caractérisé en ce que** la couche compensatoire (21) correspond à la taille de l'élément d'affichage (29) du module d'affichage (14).

3. Document selon la revendication 1, **caractérisé en ce que** la fenêtre (37) de la couche opaque (36) est plus petite que l'élément d'affichage (29) et **en ce que** la couche compensatoire (21) correspond à la taille de la fenêtre (37) ménagée dans la couche opaque (36).

4. Document selon la revendication 1, **caractérisé en ce que** la couche compensatoire (21) est appliquée sur la couche de substrat de carte (18) ou sur la couche de substrat de puce (28), en face de l'élément d'affichage (29), ou **en ce qu'**elle est réalisée sous forme de couche compensatoire séparée (21).

5. Document selon la revendication 1, **caractérisé en ce que** la couche compensatoire (21) est réalisée sous forme de couche appliquée par impression, lamination, pointage ou collage.

6. Document selon la revendication 1, **caractérisé en ce que** l'épaisseur de la couche compensatoire (21) correspond à l'épaisseur de la couche opaque (36) ou **en ce que** l'épaisseur de la couche compensatoire (21) est inférieure à l'épaisseur de la couche opaque (36), de préférence jusqu'à 20% inférieure à l'épaisseur de la couche opaque (36).

7. Document de sécurité selon la revendication 1, **caractérisé en ce que** la couche de substrat de puce (28) présente une connexion (31) qui est tournée vers la couche de substrat de carte (18) et qui peut être mise en contact avec une connexion (19) d'une antenne (16) disposée sur la couche de substrat de carte (18) et **en ce qu'**une antenne (16) est disposée de préférence sur ou dans la couche de substrat de puce (28) du module d'affichage (14).

8. Document selon la revendication 1, **caractérisé en ce qu'**il est prévu au moins une autre couche de compensation (32) pourvue d'au moins une fenêtre (33) destinée à recevoir l'élément d'affichage (29) et la puce IC (30).

9. Document de sécurité selon la revendication 1, **caractérisé en ce qu'**entre la couche de substrat de puce (28) et la couche opaque (36) est prévue au moins une autre couche de compensation (34) qui recouvre de préférence au moins partiellement le module d'affichage (14) et **en ce qu'**il est prévu de préférence au moins une première couche d'impression (38) qui est disposée sur la couche opaque (36), du côté opposé au module d'affichage (14).

10. Document selon l'une quelconque des revendications précédentes, **caractérisé en ce que** les couches du corps de carte (12) sont réalisées en PC (polycarbonate) ou en un PVC (chlorure de polyvinyle) avec respectivement une couche extérieure en PC (polycarbonate).

11. Document selon la revendication 1, **caractérisé en ce qu'**entre les différentes couches et/ou films sont prévus, respectivement d'un seul côté ou des deux côtés, des films de colle réactive (24) qui sont formés par des polyisocyanates, des polymères réactifs aux isocyanates.

12. Procédé destiné à fabriquer un document de sécurité ou de valeur (11) selon l'une quelconque des revendications 1 à 11, **caractérisé en ce que**
- une couche de substrat de carte (18) est fournie,
- au moins une couche de compensation (23) avec fenêtre (26) et au moins une couche opaque (36) avec fenêtre (37) sont fabriquées,
- une couche de substrat de puce (28) du module d'affichage (14) et la couche de substrat de carte (18) sont positionnées l'une par apport à l'autre avec, entre elles, au moins une couche compensatoire (21),
- la couche de substrat de carte (18) sur laquelle est disposée la couche de substrat de puce (28), ladite au moins une couche de compensation (23) avec une fenêtre (26) et la couche opaque (36) avec fenêtre (37) sont assemblées pour former une pile,
- les couches de la pile sont pointées, puis laminées de manière à les rendre solidaires.

13. Procédé selon la revendication 12, **caractérisé en ce qu'**au moins une autre couche de compensation (34) est positionnée entre la couche de substrat de puce (28) et la couche opaque (36) ou **en ce qu'**au moins une première couche d'impression (38) est positionnée sur une face extérieure de la couche opaque (36) ou **en ce que** les deux couches sont positionnées dans la pile.

14. Procédé selon la revendication 12, **caractérisé en ce que** ladite au moins une couche compensatoire (21) est appliquée sur la couche de substrat de carte (18) ou sur le côté de la couche de substrat de puce (28) opposé à l'élément d'affichage (29) et **en ce qu'**une antenne (16) est appliquée de préférence sur la couche de substrat de carte (18) et que lors du positionnement du module d'affichage (14) sur la couche de substrat de carte (18), l'antenne (16) est mise en contact grâce à des points de connexion (19, 31).

15. Procédé selon la revendication 12, **caractérisé en ce que** la pile est laminée dans une presse à chaud et à froid dans un cycle de pression à chaud et à froid et **en ce que** les couches de préférence pressées ensemble pour former un bloc monolithique sont découpées et de préférence personnalisées.
